# EUROPÄISCHE PATENTSCHRIFT

(11) **EP 1 001 206 B1**
(45) Veröffentlichungstag und Bekanntmachung des Hinweises auf die Patenterteilung: **13.08.2003**
(21) Anmeldenummer: 99120209.4
(22) Anmeldetag: 09.10.1999
(51) Int. Cl.: F16L 55/165

(54) **Verfahren und Vorrichtung zum Sanieren eines im Erdreich verlegten Altrohrstranges**
Method and apparatus for renovating an old tubing buried in the ground
Méthode et appareil pour la rénovation d'un vieil élément tubulaire enterré

(30) Priorität: 16.11.1998 DE 19852690
(43) Veröffentlichungstag der Anmeldung: 17.05.2000
(73) Patentinhaber: KMG Kanal-Müller-Gruppe International GmbH & Co. KG, 32816 Schieder-Schwalenberg (DE)
(72) Erfinder: Einhaus, Gerhard, 66978 Leimen (DE); Schreiner, Herbert, 33839 Steinheim (DE)
(74) Vertreter: Stracke, Alexander, Dipl.-Ing.

(56) Entgegenhaltungen:
- EP-A- 0 393 304
- EP-A- 0 479 386
- WO-A-97/04269
- US-A- 5 680 885

## Beschreibung

Die Erfindung bezieht sich auf ein Verfahren zum Sanieren eines im Erdreich verlegten Altrohrstranges, vorzugsweise eines Abwasserkanals, unter Verwendung eines harzgetränkten Schlauchverbundes aus Fasern, Filz oder einem Gewebe, der in den Altrohrstrang durch einen von der Erdoberfläche zu dem Altrohrstrang sich erstreckenden Schacht eingezogen und mittels eines Druckmediums an die Innenwandung des Altrohrstranges gepreßt, das Druckmedium erhitzt und die Druck- und Wärmebelastung des Schlauchverbundes bis zur Harzaushärtung aufrechterhalten wird.

Die Erfindung betrifft ferner eine Vorrichtung zur Durchführung des Sanierungsverfahrens.

Es ist ein Verfahren der eingangs genannten Art bekannt, bei dem der aus einem Nadelfilz, aus Fasern oder einem Gewebe gefertigte und an der Außen- und/oder Innenseite mit einer füssigkeitsdichten Schicht versehene Auskleideschlauch im Werk mit Harz getränkt und im Kühlwagen zum Einsatzort transportiert wird. Nach der Reinigung des zu sanierenden Altrohrstranges wird der Auskleideschlauch durch einen Schacht in den Altrohrstrang eingezogen. In den Schacht wird ein Inversionsrohr eingesetzt, das aus der oberen Schachtöffnung herausragt. Am oberen Rand des Inversionsrohres wird ein Ende eines Kalibrierschlauches festgelegt, während am unteren Ende des Inversionsrohres ein Ende des Auskleideschlauches befestigt wird. Unter dem Einfluß eines Druckmediums, vorzugsweise Wasser wird der Kalibrierschlauch in den Auskleideschlauch eingestülpt. Der unter dem Druck des Wassers durch den Auskleideschlauch bewegte Kalibrierschlauch weitet den Auskleideschlauch auf und preßt ihn an die Innenwandung des Altrohstranges. Am vorderen freien Ende, und zwar an der Innenseite des Kalibrierschlauches ist ein perforierter Heizschlauch befestigt, der bei der Inversion des Kalibrierschlauches mit dem Kalibrierschlauch in den Auskleideschlauch eingeführt wird. Durch den Heizschlauch wird dann erhitztes Wasser oder Wasserdampf von außen zugeführt, während aus dem unteren Bereich des Inversionsrohres Wasser abgesaugt wird, so daß der Füllungsgrad des beschriebenen, das Druckmedium aufnehmenden offenen Systems konstant bleibt.

Bei dem bekannten Verfahren wird oberirdisch nur die Harztränkung des Auskleideschlauches vorgenommen, der dann gekühlt zum Einsatzort transportiert wird.

Aus der US 5 680 885 ist ein Verfahren zum Sanieren eines Altrohrstranges bekannt, bei dem zuerst ein durch ein Zugelement endseitig verschlossener Schlauch mit einer inneren harzgetränkten Schicht in den Altrohrstrang eingezogen wird, in den dann ein Kalibrierschlauch eingestülpt wird. Anschließend wird dann ein Fluid in den Kalibrierschlauch eingefüllt, um die Harzschicht zwischen der äußeren Schicht und dem Kalibrierschlauch auszuhärten. Für eine Zirkulation des Fluides kann an dem Kalibrierschlauch endseitig ein Schlauch eingezogen werden. Bei diesem Verfahren besteht der Nachteil, dass jeweils nur ein Abschnitt eines Altrohrstranges zwischen zwei Schächten saniert werden kann. Benachbarte Altrohrstränge müssen getrennt voneinander mit den Schläuchen ausgekleidet werden.

Es ist daher Aufgabe der vorliegenden Erfindung, ein Verfahren zum Sanieren eines Alrtohrstranges und eine entsprechend Vorrichtung zu schaffen, mit der Altrohrstränge effektiv saniert werden können.

Diese Aufgabe wird mit einem Verfahren mit den Merkmalen des Anspruches 1 sowie einer Vorrichtung mit den Merkmalen des Anspruches 5 gelöst.

Im Gegensatz zum beschriebenen, bekannten Verfahren wird ein vorgefertigtes Schlauchsystem von dem Heizmedium im Durchgang durchströmt. Das Schlauchsystem wird damit Bestandteil des Heizkreislaufes. Dieses führt im Vergleich mit dem bisherigen Verfahren, bei dem das Heizmedium im Schlauchsystem zirkuliert, zu einer über den Rohrquerschnitt gesehen besseren Wärmeverteilung und einer besser steuerbaren (regelbaren) Aufheiz- und Abkühlungskurve und ggf. auch zu einer deutlichen Reduzierung der Aufheiz- und Abkühlungszeiten. Die Erstellung des Schlauchverbundes im Werk ergibt eine bessere Qualitätskontrolle.

Da das Druckmedium in einem geschlossenen System geführt wird, treten keine Druckschwankungen auf. Ferner wird eine bessere Verdichtung erreicht.
Es können gleichzeitig mehrere Altrohrstränge saniert werden.
Die Altrohrstränge können horizontal oder lateral versetzt sein.

Bei einer Ausführungsform des Verfahrens wird das aufgeheizte Druckmedium ausschließlich während des Zeitraums der Aushärtung des Harzes in einem geschlossenen System geführt. Es können die im geschlossenen System vorgesehene Pumpe und der Wärmetauscher abgekuppelt und die Enden der Rohrleitungen oder Schläuche, die das Druckmedium enthalten, mit Absperrorganen abgesperrt. Die Absperrung wird am Ende der nun beginnenden Kühlperiode gelöst und es wird dann das Druckmedium abgezogen. Ferner werden die Anschlußköpfe an den Enden des Auskleideschlauches entfernt. Zur Vermeidung eines Unterdrucks kann eine Entlüftungseinrichtung vorgesehen werden.

Die Vorrichtung zur Durchführung des Verfahrens weist eine oberirdisch angeordnete, mit Druckluft betriebene Druckkammer auf, die mit einem Stutzen zum Festlegen eines Endes des Auskleideschlauches und des in den Auskleideschlauch einstülpbaren Kalibrierschlauches bzw. der Schlauchfolie und des in die Schlauchfolie einstülpbaren Auskleideschlauches versehen ist. Ein oder mehrere in Altrohrstränge eingezogene Auskleideschläuche bilden ein Teilstück oder Teilstücke eines geschlossenen Schlauch- oder Rohrleitungssystems, in dem mindestens eine Pumpe und mindestens eine Aufheizeinrichtung für das durch das System geführte Druckmedium angeordnet sind.

Weitere Merkmale der Erfindung ergeben sich aus den Unteransprüchen.

Ausführungsbeispiele des erfindungsgemäßen Verfahrens bzw. der Vorrichtung zur Durchführung des Verfahrens sind in den Zeichnungen dargestellt und werden im folgenden beschrieben.

Es zeigen:
- Figur 1: in schematischer Darstellung eine mit Druckluft betriebene, oberirdisch angeordnete Druckkammer,
- Figur 2: in zwei Altrohrstränge, die in der Höhenlage versetzt zueinander sind, eingezogene Auskleideschläuche und das zugeordnete Rohr- oder Schlauchsystem zur Führung des Druckmediums in einem geschlossenen Kreislauf,
- Figur 3: einen Anschlußkopf für das Ende eines Auskleideschlauches im Schnitt,
- Figur 4: das oberirdische Einstülpen eines Auskleideschlauches in eine Schlauchfolie unter Verwendung von Druckluft,
- Figur 5: das oberirdische Einstülpen eines Kalibrierschlauches in einen Auskleideschlauch unter Verwendung von Druckluft, wobei der Kalibrierschlauch mit einem Harzträger versehen ist, und
- Figur 6: das oberirdische Einstülpen eines Kunststoffkalibrierschlauches in einen Auskleideschlauch, ebenfalls unter Verwendung von Druckluft.

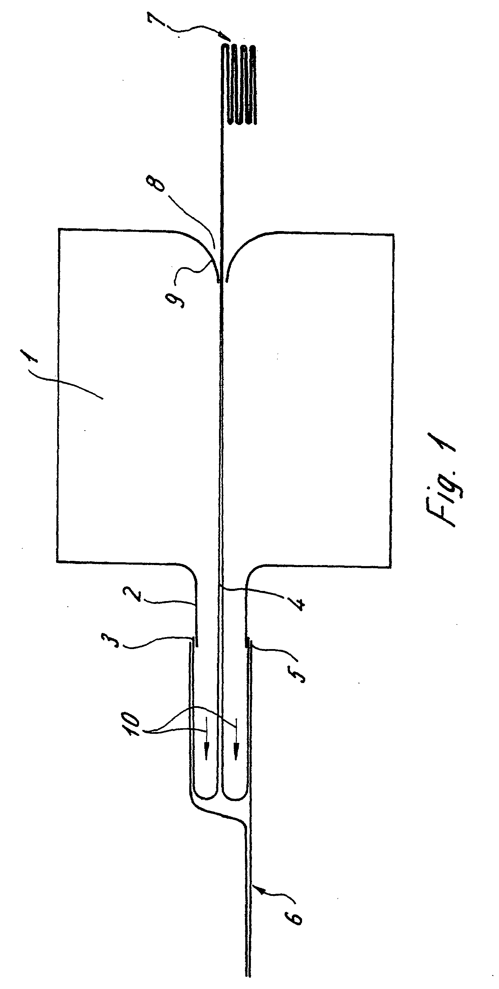

In der Fig. 1 ist eine Druckkammer 1 dargestellt, die mit Druckluft betrieben wird und einen Stutzen 2 aufweist, an dessen Öffnungsrand ein Ende 3 eines Kalibrierschlauches 4 und ein Ende 5 eines Auskleideschlauches 6 festgelegt ist. Der Kalibrierschlauch 4 ist außerhalb der Druckkammer 1 in einem Stapel 7 zusammengelegt und wird durch eine Öffnung 8, die mit einer Dichtung 9 ausgestattet ist, in die Druckkammer 1 eingeführt und mit dem freien Ende 3 am Stutzen 2 befestigt. Durch die in Richtung der Pfeile 10 wirkende Druckluft wird der Auskleideschlauch 6 aufgeweitet und nimmt in seinem Innenraum den Kalibrierschlauch 4 auf.

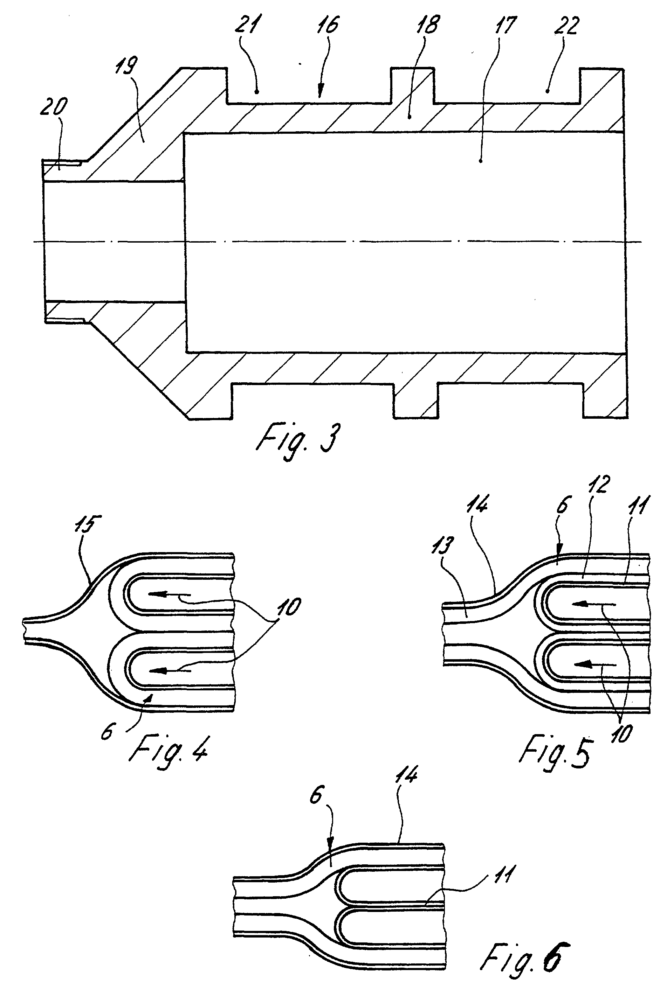

Der Kalibrierschlauch 4 kann, wie in der Fig. 6 dargestellt, als Kunststoffschlauch 11 ausgebildet sein.

Es besteht aber auch wie Möglichkeit, wie sich aus der Fig. 5 ergibt, den Kunststoffschlauch 11 des Kalibrierschlauches mit einem Harzträger 12 zu beschichten. Dieser Harzträger verbindet sich beim Einstülpen des Kalibrierschlauches in den Auskleideschlauch 6 mit der mit Harz getränkten Schicht 13 des Auskleideschlauches 6, der außen mit einer flüssigkeitsundurchlässigen Schicht 14 versehen ist.

Aus der Fig. 4 ergibt sich, daß auch die Möglichkeit besteht, mittels der Druckkammer 1 einen Auskleideschlauch 6 in eine Schlauchfolie 15 einzustülpen.

Der Schlauchverbund aus einem Kalibrierschlauch 4 und einem Auskleideschlauch 6 oder aus einer Schlauchfolie 15 und einem Auskleideschlauch 6 wird an den Enden mit einem Anschlußkopf 16 ausgerüstet, der im Durchmesser kleiner ist als das zu sanierende Altrohr.

Der in der Fig. 3 im Schnitt dargestellte Anschlußkopf, der z.B. aus Aluminium oder einem sonstigen Leichtmetall gefertigt wird, ist als Hohlkörper ausgebildet. Der Innenraum 17 ist an den Stirnenden geöffnet und setzt sich aus einem zylindrischen Teil 18 und einem konischen Teil 19 zusammen. Vor dem konischen Teil ist ein mit einem Außengewinde versehener Anschlußstutzen 20 angeordnet. An diesem Anschlußstutzen kann eine Zugmutter für ein Seil zum Einziehen des Auskleideschlauches in einen Altrohrstrang oder ein Schlauchanschluß festgelegt werden.

Zur Verbindung der Enden des Auskleideschlauches mit einem Anschlußkopf 16 werden Schlauchenden über den Anschlußkopf geführt, der umlaufende Nuten 21,22 aufweist. Um die Enden des Auskleideschlauches werden Befestigungsschellen 23,24 gelegt, die Teile des Endes des Auskleideschlauches in die Ringnuten 21,22 pressen.

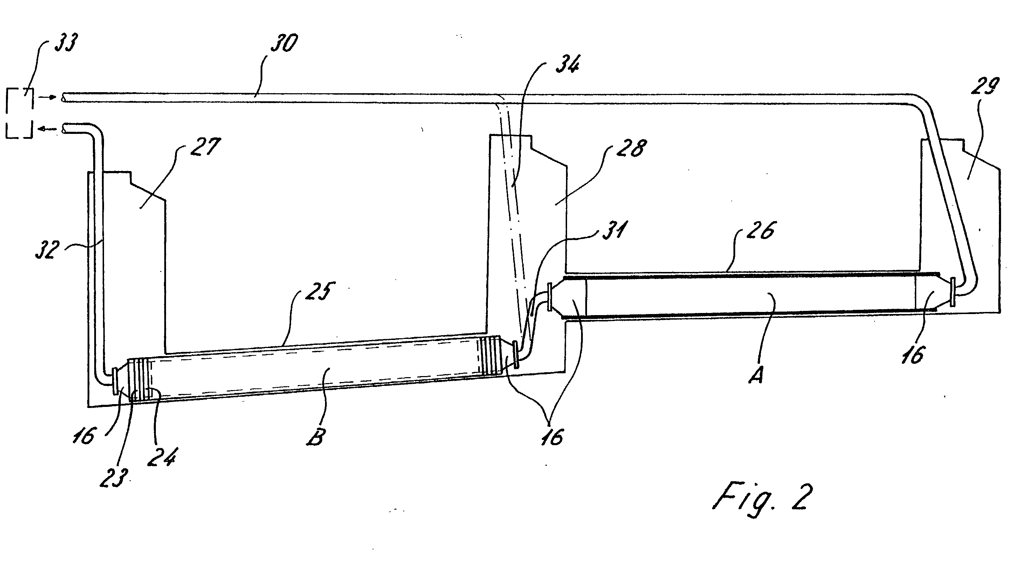

Bei dem in der Fig. 2 dargestellten Ausführungsbeispiel sind in zwei Altrohrstränge 25,26, die von der Erdoberfläche über Schächte 27,28,29 zugänglich sind, Auskleideschläuche eingezogen, die entsprechend den Ausführungsbeispielen in den Figuren 4, 5 oder 6 ausgebildet sein können. Diese schlauchförmigen Auskleidungen sind Teilstücke eines geschlossenen Systems für ein Druckmedium, z.B. Wasser,das durch eine Rohr- oder Schlauchleitung 30 dem Anschlußkopf 16 der schlauchförmigen Auskleidung A zugeführt wird und über einen Verbindungsschlauch 31 die schlauchförmige Auskleidung B durchläuft und über Schlauch- oder Rohrleitung 32 aus dem Schacht 27 herausgeführt und eine Aufheizeinrichtung 33 durchströmt.

Sofern nur die schlauchförmige Auskleidung B in den Altrohrstrang 25 eingezogen ist, wird das Druckmedium über die Schlauch- oder Rohrleitung der strichpunktiert dargestellten Schlauch- und Rohrleitung 34 zugeführt, die mit dem Anschlußkopf der schlauchförmigen Auskleidung B verbunden ist.

Die Aufheizeinrichtung bzw. der Wärmetauscher 33 kann mit einer Pumpe, die das Druckmedium in dem geschlossenen System fördert, zu einer Baueinheit zusammengefaßt sein. Diese Baueinheit kann für die Kühlperiode abgekuppelt werden, nachdem die freien Enden der Rohr- oder Schlauchleitungen 30 und 33 durch Absperrorgane verschlossen sind.

Die mit Druckluft betriebene Druckkammer 1, die oberirdisch und zwar im Werk oder am Einsatzort verwendet wird, ist sehr leicht zu transportieren, da sie kleine Abmessungen aufweist.

### Bezugszeichenliste

- 1: Druckkammer
- 2: Stutzen
- 3: Ende
- 4: Kalibrierschlauch
- 5: Ende
- 6: Auskleideschlauch
- 7: Stapel
- 8: Öffnung
- 9: Dichtung
- 10: Pfeil
- 11: Kunststoffschlauch
- 12: Harzträger
- 13: Schicht
- 14: Schicht
- 15: Schlauchfolie
- 16: Anschlußkopf
- 17: Innenraum
- 18: zylindrischer Teil
- 19: konischer Teil
- 20: Anschlußstutzen
- 21: Nut
- 22: Nut
- 23: Befestigungsschelle
- 24: Befestigungsschelle
- 25: Altrohrstrang
- 26: Altrohrstrang
- 27: Schacht
- 28: Schacht
- 29: Schacht
- 30: Schlauchleitung
- 31: Verbindungsschlauch
- 32: Schlauch- oder Rohrleitung
- 33: Aufheizeinrichtung
- 34: Schlauch oder Rohrleitung

## Patentansprüche

1. Verfahren zum Sanieren eines im Erdreich verlegten Altrohrstranges (25, 26), vorzugsweise eines Abwasserkanals, unter Verwendung eines harzgetränkten Schlauchverbundes aus Fasern, Filz oder einem Gewebe, der in den Altrohrstrang (25, 26) durch einen von der Erdoberfläche zu dem Altrohrstrang (25, 26) sich erstreckenden Schacht (27, 28, 29) eingezogen und mittels eines Druckmediums an die Innenwandung des Altrohrstranges (25, 26) gepreßt, das Druckmedium erhitzt und die Druck und Wärmebelastung des Schlauchverbundes bis zur Harzaushärtung aufrechterhalten wird, wobei unter Verwendung von Druckluft ein Schlauch (4) in einen anderen Schlauch (6) invertiert wird, dieser Schlauchverbund außen und innen eine undurchlässige Schicht und in der Mitte mindestens eine Schicht aufweist, die mit Harz getränkt ist,
**dadurch gekennzeichnet, dass**
der Schlauchverbund an beiden Enden mittels Anschlußköpfen (16), die einen Durchlauf aufweisen, verschlossen wird, durch einen Schacht (27, 28, 29) in den Altrohrstrang (25, 26) eingezogen wird und die Anschlußköpfe (16) jeweils mit einer durch einen Schacht (27, 28, 29) geführten Schlauch- oder Rohrleitung (32, 34) verbunden werden und durch ein im geschlossenen Kreislauf geführtes, aufheizbares Druckmedium den Schlauchverbund an die Innenwandung des zu sanierenden Altrohrstranges (25, 26) anpreßt und bis zur Aushärtung über den gesamten Querschnitt in einer Richtung durchströmt.

2. Verfahren nach Anspruch 1, **dadurch gekennzeichnet, dass** das im Kreislauf umlaufende erwärmte Druckmedium durch mehrere in Altrohrstränge (25, 26), eingezogene schlauchförmige Auskleidungen (A, B), die durch Schläuche oder Leitungen (31) verbunden sind, geführt wird.

3. Verfahren nach Anspruch 1 oder 2, **dadurch gekennzeichnet, dass** ausschließlich während des Zeitraums der Aushärtung das aufgeheizte Druckmedium im Kreislauf in einem geschlossenen System geführt wird und anschließend die Pumpe und die Aufheizeinrichtung (33) abgekoppelt und die Enden der Rohrleitung oder Schläuche (30, 32) mit einem Absperrorgan abgesperrt werden, bis eine Abkühlung des Druckmediums erfolgt ist.

4. Verfahren nach einem der Ansprüche 1 bis 3, **dadurch gekennzeichnet, dass** zur Ertellung des Schlauchverbundes oberirdisch in den flachliegenden Auskleideschlauch (6) ein Kalibrierschlauch (4) oder in eine Schlauchfolie (15) ein Aukleideschlauch (6) unter Verwendung von Druckluft eingestülpt wird und die Enden des mit einem eingestülpten Kalibrierschlauch (4) oder mit der umhüllenden Schlauchfolie versehenen Aukleideschlauches (6) mit dem Anschlußkopf (16) ausgerüstet werden, an dem Zugmittel oder Schläuche bzw. Leitungsrohre (30, 31, 32, 34) anschließbar sind.

5. Vorrichtung zum Sanieren eines im Erdreich verlegten Altrohrstranges (25, 26), vorzugsweise eines Abwasserkanals, insbesondere zur Durchführung des Verfahrens nach einem der vorhergehenden Ansprüche, mit einem in einem Altrohrstrang (25, 26) eingezogenen Auskleideschlauch (6), in den ein Kalibrierschlauch (4) eingezogen ist, die einen harzgetränkten Schlauchverbund aus Fasern, Filz oder einem Gewebe für eine schlauchförmige Auskleidung (A, B) bilden, und ein Teilstück eines geschlossenen Schlauch- oder Rohrleitungssystems sind, in dem mindestens eine Pumpe und mindestens eine Aufheizvorrichtung (33) für das durch das System geführte Druckmedium angeordnet sind, **dadurch gekennzeichnet, dass** der Schlauchverbund an beiden Enden mittels Anschlußköpfen (16), die einen Durchlauf aufweisen, verschlossen ist, und die Anschlußköpfe (16) jeweils mit einer durch einen Schacht (27, 28, 29) geführten Schlauch- oder Rohrleitung (32, 34) verbunden sind und ein aufheizbares Druckmedium in dem so gebildeten geschlossenen Kreislauf durchleitbar ist.

6. Vorrichtung nach Anspruch 5, **dadurch gekennzeichnet, dass** die Pumpe und die Aufheizvorrichtung (33) eine von dem Kreislauf abkuppelbare Baueinheit bilden.

7. Vorrichtung nach Anspruch 5 oder 6, **dadurch gekennzeichnet, dass** Absperrorgane an den Rohr- oder Schlauchleitungen (30, 32) vorgesehen sind.

8. Vorrichtung nach einem der Ansprüche 5 bis 7, **dadurch gekennzeichnet, dass** jeder Anschlußkopf (16) als Hohlkörper ausgebildet ist, dessen Innenraum an den Stirnkanten geöffnet ist und aus einem zylindrischen Teil (18) und aus einem konischen Teil (19) besteht.

9. Vorrichtung nach Anspruch 8, **dadurch gekennzeichnet, dass** der konische Teil (19) in einen zylindrischen, mit einem Außengewinde versehenen Anschlußstutzen (20) übergeht, an dem eine Zugmutter oder ein Schlauchanschluß festlegbar ist.

10. Vorrichtung nach einem der Ansprüche 5 bis 9, **dadurch gekennzeichnet, dass** der Anschlußkopf (16) einen zylindrischen Teil (18) aufweist, der Ringnuten (21, 22) zur Aufnahme des Teils eines Endes des auf den Anschlußkopf (16) geschobenen Auskleideschlauches (6) sowie von um das Schlauchende gelegten Befestigungsschellen umfasst.

11. Vorrichtung nach einem der Ansprüche 5 bis 10, **dadurch gekennzeichnet, dass** in mehrere horizontal und/oder lateral versetzt angeordnete Altrohrstränge (25, 26) miteinander verbundene Auskleidungen (A, B) eingezogen sind.

## Claims

1. Method of renovating an old pipe run (25, 26) buried in the ground, preferably a sewer, using a resin-impregnated hose assembly composed of fibres, felt or a woven fabric, which assembly is drawn into the old pipe run (25, 26) through a shaft (27, 28, 29) extending from the ground surface to the old pipe run (25, 26) and is pressed onto the inner wall of the old pipe run (25, 26) by means of a pressure medium, the pressure medium is heated and the pressure and thermal loading on the hose assembly is maintained until the resin cures, in which arrangement a hose (4) is inverted into another hose (6) using compressed air, this hose assembly has an impermeable layer both on the outside and inside and has in the centre at least one layer which is impregnated with resin, **characterized in that** the hose assembly is closed at both ends by means of connection heads (16) which have a passage, is drawn into the old pipe run (25, 26) through a shaft (27, 28, 29) and the connection heads (16) are each connected to a hoseline or pipeline (32, 34) routed through a shaft (27, 28, 29), and a heatable pressure medium carried in the closed circuit presses the hose assembly onto the inner wall of the old pipe run (25, 26) to be renovated and flows through in one direction over the entire cross section until curing is complete.

2. Method according to Claim 1, **characterized in that** the heated pressure medium circulating in the circuit is carried through a plurality of tubular linings (A, B) drawn into old pipe runs (25, 26), said linings being connected by means of hoses or lines (31).

3. Method according to Claim 1 or 2, **characterized in that** the heated pressure medium in the circuit is carried in a closed system exclusively during the period of curing and the pump and the heating device (33) are subsequently uncoupled and the ends of the pipeline or hoses (30, 32) are shut off by means of a shut-off member until cooling of the pressure medium has taken place.

4. Method according to one of Claims 1 to 3, **characterized in that** the hose assembly is produced by a procedure in which, above ground, a calibration hose (4) is inverted into the flat liner hose (6), or a liner hose (6) is inverted into a tubular film (15), using compressed air, and the ends of the liner hose (6) provided with an inverted calibration hose (4) or with the enveloping tubular film are equipped with the connection head (16), to which pulling means or hoses or line pipes (30, 31, 32, 34) can be connected.

5. Apparatus for renovating an old pipe run (25, 26) buried in the ground, preferably a sewer, in particular for implementing the method according to one of the preceding claims, having a liner hose (6) which is drawn into an old pipe run (25, 26) and into which a calibration hose (4) has been drawn, which hoses form a resin-impregnated hose assembly composed of fibres, felt or a woven fabric for a tubular lining (A, B), and are a portion of a closed hoseline or pipeline system in which at least one pump and at least one heating device (33) for the pressure medium carried through the system are arranged, **characterized in that** the hose assembly is closed at both ends by means of connection heads (16) which have a passage, and the connection heads (16) are each connected to a hoseline or pipeline (32, 34) routed through a shaft (27, 28, 29), and a heatable pressure medium can be passed through the closed circuit thus formed.

6. Apparatus according to Claim 5, **characterized in that** the pump and the heating device (32) form a structural unit which can be uncoupled from the circuit.

7. Apparatus according to Claim 5 or 6, **characterized in that** shut-off members are provided on the pipelines or hoselines (30, 32).

8. Apparatus according to one of Claims 5 to 7, **characterized in that** each connection head (16) is designed as a hollow body whose interior is open at the front edges and consists of a cylindrical part (18) and of a conical part (19).

9. Apparatus according to Claim 8, **characterized in that** the conical part (19) merges into a cylindrical connection stub (20) which is provided with an external thread and on which a tension nut or a hose connection can be fixed.

10. Apparatus according to one of Claims 5 to 9, **characterized in that** the connection head (16) has a cylindrical part (18) which comprises annular grooves (21, 22) for receiving the part of an end of the liner hose (6) pushed onto the connection head (16) and also for receiving fastening clips placed around the hose end.

11. Apparatus according to one of Claims 5 to 10, **characterized in that** interconnected linings (A, B) are drawn into a plurality of old pipe runs (25, 26) arranged with a horizontal and/or lateral offset.

## Revendications

1. Procédé d'assainissement d'une ligne de vieux tubes (25, 26) posée dans le sol, de préférence d'une canalisation d'eaux usées, par utilisation d'un composite tubulaire imprégné de résine constitué de fibres, d'un feutre ou d'un tissu, qui est tiré à l'intérieur de la ligne de vieux tubes (25, 26) à travers un puits (27, 28, 29) s'étendant depuis la surface de la terre jusqu'à la ligne de vieux tubes (25, 26) et est pressé, au moyen d'un fluide sous pression, contre la paroi intérieure de la ligne de vieux tubes (25, 26), le fluide sous pression est chauffé et la pression ainsi que l'action de la chaleur sur le composite tubulaire sont maintenus jusqu'au durcissement de la résine, dans lequel, par utilisation d'air comprimé, un tuyau (4) est inversé en un autre tuyau (6), ce composite tubulaire présente à l'extérieur et à l'intérieur une couche imperméable et au milieu au moins une couche qui est imprégnée de résine,
**caractérisé en ce que**
le composite tubulaire est fermé à ses deux extrémités au moyen de têtes de raccordement (16) qui présentent un passage, est tiré à travers un puits (27, 28, 29) à l'intérieur de la ligne de vieux tubes (25, 261 et les têtes de raccordement (16) sont reliées chacune à une conduite flexible ou rigide (32, 34) guidés à travers un puits (27, 28, 29), et un fluide sous pression pouvant être chauffé, transporté en circuit fermé, presse le composite tubulaire contre la paroi intérieure de la ligne de vieux tubes (25, 26) à assainir et circule dans un sens sur toute la section transversale, jusqu'au durcissement.

2. Procédé selon la revendication 1, **caractérisé en ce que** le fluide sous pression chauffé circulant dans le circuit est guidé à travers plusieurs habillages (A, B) en forme de tuyaux enfilés à l'intérieur de lignes de vieux tubes (25, 26), lesquels habillages sont reliés par des tuyaux aux conduites (31).

3. Procédé selon la revendication 1 ou 2, **caractérisé en ce qu'**exclusivement pendant le temps de durcissement, le fluide sous pression chauffé est mis en circulation dans un système fermé, puis la pompe et le dispositif de chauffage (33) sont désaccouplés et les extrémités de la conduite rigide ou des tuyaux (30, 32) sont fermées au moyen d'un organe d'arrêt jusqu'à ce qu'il se produise un refroidissement du fluide sous pression.

4. Procédé selon l'une des revendications 1 à 3, **caractérisé en ce que** pour réaliser le composite tubulaire on introduit, en surface, un tuyau de calibrage (4) dans le tuyau d'habillage (6) reposant à plat ou un tuyau d'habillage (6) dans une feuille tubulaire (15), par utilisation d'air comprimé, et les extrémités du tuyau d'habillage (6) pourvu d'un tuyau de calibrage (4) ou de la feuille tubulaire l'enveloppant, sont équipées de la tête de raccordement (16) à laquelle peuvent être raccordés des moyens de traction ou des tuyaux ou des tubes pour conduites (30, 31, 32, 34).

5. Dispositif d'assainissement d'une ligne de vieux tubes (25, 26) posés dans le sol, de préférence d'une canalisation d'eaux usées, en particulier pour la mise en oeuvre du procédé selon l'une des revendications précédentes, comportant un tuyau d'habillage (6) enfilé à l'intérieur d'une ligne de vieux tubes (25, 26), dans lequel est enfilé un tuyau de calibrage (4), qui forment un composite tubulaire imprégné de résine constitué de fibres, d'un feutre ou d'un tissu pour un habillage (A, B) de forme tubulaire, et constituent un tronçon d'un système fermé de conduites flexibles ou rigides, dans lequel sont prévus au moins une pompe et au moins un dispositif de chauffage (33) pour le fluide sous pression guidé à travers le système, **caractérisé en ce que** le composite tubulaire est fermé à ses deux extrémités au moyen de têtes de raccordement (16) qui présentent un passage, et les têtes de raccordement (16) sont reliées chacune à une conduite flexible ou rigide (32, 34) guidée à travers un puits (27, 28, 29), et un fluide sous pression pouvant être chauffé peut être guidé dans le circuit fermé ainsi constitué.

6. Dispositif selon la revendication 5, **caractérisé en ce que** la pompe et le dispositif de chauffage (33) forment une unité de construction pouvant être désaccouplée du circuit.

7. Dispositif selon la revendication 5 ou 6, **caractérisé en ce que** des organes d'arrêt sont prévus sur les conduites rigides ou flexibles (30, 32).

8. Dispositif selon l'une des revendications 5 à 7, **caractérisé en ce que** chaque tête de raccordement (16) est réalisée sous la forme d'un corps creux dont le volume intérieur est ouvert sur les bords frontaux et est constituée d'une partie cylindrique (18) et d'une partie conique (19).

9. Dispositif selon la revendication 8, **caractérisé en ce que** la partie conique (19) se prolonge par une tubulure de raccordement (20) cylindrique pourvue d'un filetage extérieur à laquelle peut être fixé un écrou de traction ou un raccord de tuyau.

10. Dispositif selon l'une des revendications 5 à 9, **caractérisé en ce que** la tête de raccordement (16) présente une partie cylindrique (18) qui comprend des rainures annulaires (21, 22) destinées à recevoir la partie d'une extrémité du tuyau d'habillage (6) enfilé sur la tête de raccordement (16), ainsi que des colliers de fixation placés autour de l'extrémité du tuyau.

11. Dispositif selon l'une des revendications 5 à 10, **caractérisé en ce que** des habillages (A, B) reliés entre eux sont enfilés à l'intérieur de plusieurs lignes de vieux tubes (25, 26) disposées décalées horizontalement et/ou latéralement.
